# EUROPEAN PATENT APPLICATION

(11) **EP 4 825 708 A1**
(43) Date of publication of application: **21.10.2026**
(21) Application number: 26172343.1
(22) Date of filing: 14.04.2026
(51) Int. Cl.: B62D 25/14, B62D 25/08, B62D 29/00, B62D 65/02

(54) **VEHICLE, AND MANUFACTURING METHOD OF VEHICLE**

(30) Priority: 18.04.2025 JP 2025068557
(71) Applicant: Toyota Jidosha Kabushiki Kaisha, Toyota-shi, Aichi-ken 471-8571 (JP)
(72) Inventor: KOBAYASHI, Naoto, TOYOTA-SHI, AICHI-KEN, 471-8571 (JP); NOGUCHI, Kohei, TOYOTA-SHI, AICHI-KEN, 471-8571 (JP); MINAMI, Kosei, MIYAWAKA-SHI, FUKUOKA-KEN, 823-0015 (JP)
(74) Representative: Cabinet Beau de Loménie

(57) **Abstract**

A method of manufacturing a vehicle includes preparing a plurality of modules that constitute a vehicle body in each of a plurality of sub lines, and coupling the plurality of modules to construct the vehicle body in a main line. The modules include a main module (20) including a Fr cast component (28f) having at least a pair of main frame members (Fr suspension towers or the like) integrally molded into the Fr cast component by casting, the main frame members being disposed on opposite sides with respect to a center of a vehicle in a vehicle width direction, and a sub module (45) including a sub frame member (suspension tower (47) or the like) connecting the pair of main frame members and an on-vehicle component mounted with the sub frame member. The sub module (45) is coupled with the main module (20) in the main line.

## Description

### CROSS REFERENCE TO RELATED APPLICATION

This application claims priority to Japanese Patent Application No. 2025-068557 filed on April 18, 2025, which is incorporated herein by reference in its entirety including the specification, claims, drawings, and abstract and to which the skilled person can refer when considering the present disclosure.

### TECHNICAL FIELD

The present specification discloses a method of manufacturing a vehicle, and a vehicle.

### BACKGROUND

It is known that a vehicle is composed of a combination of many components. To simplify the manufacturing process of a vehicle, techniques have been proposed for combining a plurality of segmented parts of a vehicle into modules and assembling the modules sequentially.

JP H11-240475 A, for example, discloses a method of manufacturing a two-wheeled vehicle. According to the method disclosed in JP H11-240475 A, a front fork module, a front frame module, an engine module, and a rear frame module are individually preassembled, and these individually preassembled modules (hereinafter referred to as "individual modules") are then sequentially combined in a combining module line to constitute a combined module.

However, the technique disclosed in JP H11-240475 A assumes a vehicle being assembled is a two-wheeled vehicle and is consequently not applicable to four-wheeled vehicles. For example, most two-wheeled vehicles include a frame member at a center in the vehicle width direction, while most motor vehicles, such as four-wheeled vehicles, include a pair of frame members at opposite sides of the center in the vehicle width direction. Most of such motor vehicles further include additional frame members and on-vehicle components mounted between the pair of frame members. There have been no prior art techniques for efficiently arranging these additional members and on-vehicle components.

The present specification therefore discloses a vehicle that can be manufactured more efficiently, and a method of manufacturing a vehicle.

### SUMMARY

The method of manufacturing a vehicle disclosed in the present specification includes preparing a plurality of modules that constitute a vehicle body in each of a plurality of sub lines, and coupling the plurality of modules to construct the vehicle body in a main line. The modules include a main module including a cast component having at least a pair of main frame members disposed on opposite sides of a vehicle with respect to a center of the vehicle in a vehicle width direction and integrally molded into the cast component by casting, and a sub module including a sub frame member connecting the pair of main frame members and an on-vehicle component mounted on the sub frame member. The sub module is coupled with the main module in the main line.

Integral molding of a pair of main frame members by casting reduces the number of components. Further, connecting the pair of main frame members with the sub frame member increases rigidity of the vehicle. In addition, mounting the on-vehicle component on the sub frame member to form a module facilitates handling of the components. This results in efficient manufacturing of the vehicle.

In this configuration, the main module may include the cast component and one or more element components coupled with the cast component in the sub line.

Combining the cast component with the element components into a module further facilitates handling of the components.

The cast component may be a front cast component disposed in a front portion of the vehicle. The front cast component may include a pair of front side members, a pair of suspension towers, a pair of front inside panels, and a pair of pillar lower portions. The one or more element components may include a dash module, and the dash module may include a dash panel coupled with the cast component, and an air-conditioning component coupled with the dash panel.

Integral molding of the plurality of frame members by casting reduces the number of components while also increasing rigidity of the vehicle. Combining the components to be mounted on the front cast component into a module further facilities handling of the components.

The method further includes, in the sub line, preparing a center frame having a rectangular shape, the center frame including a pair of center side members and a pair of center cross members coupling the pair of center side members, and in the main line, after coupling the main module to the center frame, coupling the sub module to the main module. This configuration allows a large size module to be positioned with reference to the center frame, facilitating positioning between large size modules. The center frame having a rectangular shape allows the interior space inside the center frame to be used as a working space. This enhances efficiency of manufacturing of the vehicle.

The pair of main frame members may be a pair of front inside panels, and the sub frame member may be a radiator support connecting the pair of front inside panels. This configuration enables the pair of front inside panels and the radiator support to reinforce each other, thus increasing rigidity of the vehicle.

In this configuration, the sub module may be a front end module including the radiator support and a bumper reinforcement that is the on-vehicle component. This configuration enables handling of the radiator support and the bumper reinforcement as a single component, thus facilitating handling of the components.

The main module may further include a pair of front side members that are part of the cast component, and a pair of crash boxes coupled with the pair of front side members, respectively. The radiator support may be coupled with the front inside panels with the radiator support being placed on top surfaces of the respective crash boxes. The bumper reinforcement may be coupled with end faces of the respective crash boxes. This configuration allows the relative positional relationship among the radiator support, the bumper reinforcement, and the crash boxes to be maintained appropriately, thereby enabling these three members to properly receive the impact in a frontal crash.

The pair of main frame members may be a pair of suspension towers, and the sub frame member may be a tower bar connecting the pair of suspension towers. This configuration allows the pair of suspension towers and the tower bar to reinforce each other to thereby increase rigidity of the vehicle.

In this configuration, the sub module may be a heat management module including the tower bar and a heat management unit that is the on-vehicle component. This configuration allows the tower bar and the heat management module to be handled as a single component, thereby facilitating handling of the components.

The pair of main frame members may be a pair of pillar lower portions, and the sub frame member may be an instrument panel reinforcement connecting the pair of pillar lower portions. This configuration allows the pair of pillar lower portions and the instrument panel reinforcement to reinforce each other to thereby increase rigidity of the vehicle.

In this configuration, the sub module may be an instrument panel module including the instrument panel reinforcement and an instrument panel that is the on-vehicle component. This configuration allows the instrument panel reinforcement and the instrument panel to be handled as a single component, thereby facilitating handling of the components.

The pair of main frame members may be a pair of center side members, and the sub frame member may be a seat cross member connecting the pair of center side members.

Constructing the pair of center side members as a cast component enables a reduction in the number of components. Also, connecting the pair of center side members with the seat cross member increases rigidity of the vehicle.

In this configuration, the sub module may be a battery module including the seat cross member and a battery that is the on-vehicle component. This configuration allows the seat cross member and the battery to be handled as a single component, thereby facilitating handling of the components.

The pair of main frame members may be a pair of roof side members, and the sub frame member may be a roof cross member connecting the pair of roof side members.

Constructing the pair of roof side members as a cast component enables a reduction in the number of components. Also, connecting the pair of roof side members with the roof cross member increases rigidity of the vehicle.

In this configuration, the sub module may be an antenna module including a back frame that is the roof cross member, and an antenna that is the on-vehicle component. This configuration allows the back frame and the antenna to be handled as a single component, thereby facilitating handling of the components.

A vehicle disclosed in the present specification includes a main module including a cast component having at least a pair of main frame members disposed on opposite sides with respect to a center of a vehicle in a vehicle width direction and integrally molded into the cast component by casting; and a sub module including a sub frame member connecting the pair of main frame members and an on-vehicle component mounted on the sub frame member.

The technique disclosed in the present specification enables more efficient manufacturing of vehicles.

### BRIEF DESCRIPTION OF DRAWINGS

Embodiments of the present disclosure will be described based on the following figures, wherein:
FIG. 1 is a flowchart showing the first half of the flow of vehicle manufacturing;
FIG. 2 is a flowchart showing the latter half of the flow of the vehicle manufacturing;
FIG. 3 is an exploded perspective view of a center frame;
FIG. 4 is an exploded perspective view of a Fr module;
FIG. 5 is a perspective view of a Rr module;
FIG. 6 is a perspective view illustrating two front and rear modules coupled to the center frame;
FIG. 7 is a schematic side view of the Fr module;
FIG. 8 is a perspective view illustrating coupling of a side module to the center frame;
FIG. 9 schematically illustrates mounting of a battery module and a power train module to a vehicle body;
FIG. 10 is a schematic plan view illustrating coupling of a Fr end module to the Fr module; and
FIG. 11 illustrates further example main module and sub module.

### DESCRIPTION OF EMBODIMENTS

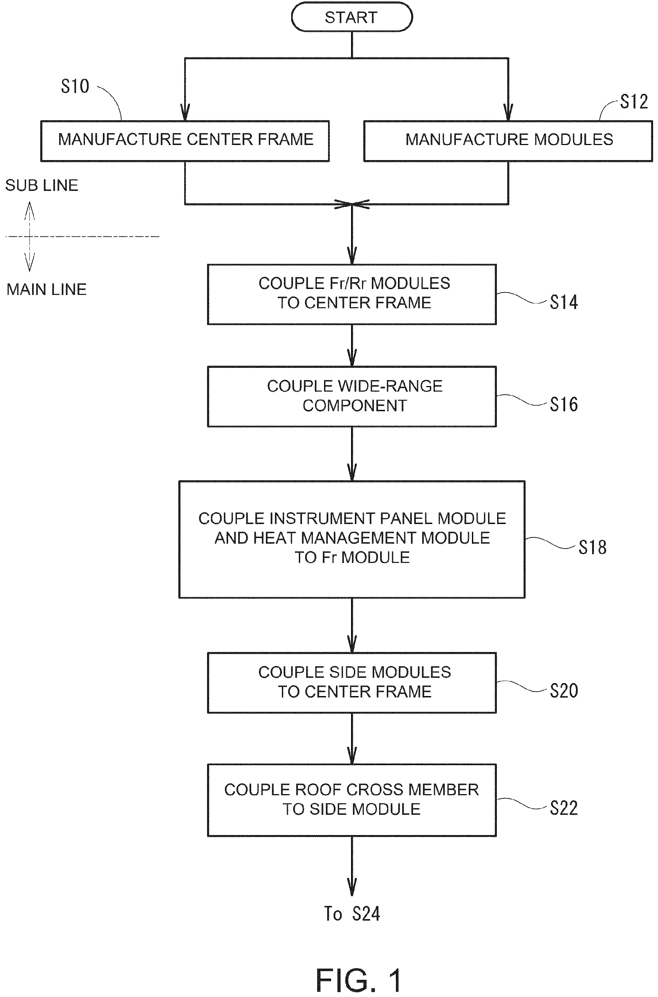

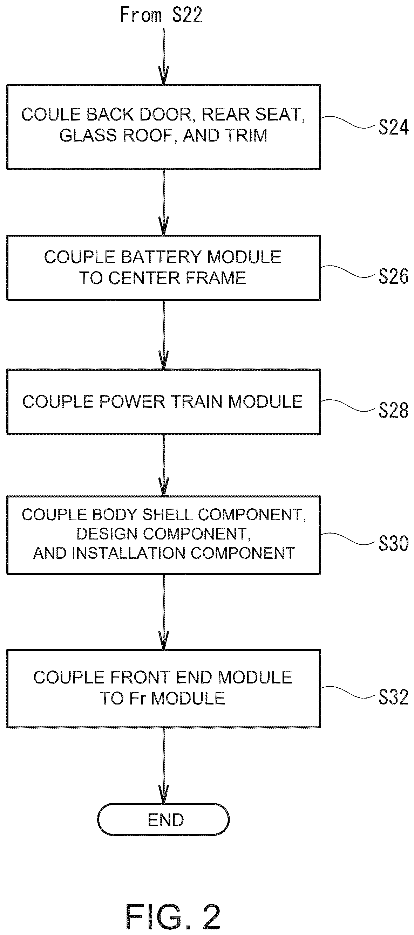

A vehicle and a method of manufacturing a vehicle will be described below by reference to the drawings. FIG. 1 and FIG. 2 are flowcharts showing a flow of vehicle manufacturing. While in the present specification, a four-wheeled passenger vehicle having a front seat and a rear seat will be described as an example, the example configuration of the vehicle described below may be modified as appropriate.

The vehicle manufacturing process is roughly divided into a process performed in a plurality of sub lines (S10 and S12), and a process performed in a main line (S14 to S32). The plurality of sub lines include a sub line (S10) for manufacturing a center frame 10 and a sub line (S12) for manufacturing modules. The center frame 10 is a rectangular frame member disposed in the lower part at the center of the vehicle, as will be detailed below. In the main line, a plurality of modules are coupled to this center frame 10, as will be described below.

A module is composed of a combination of a plurality of components. Modules have different configurations depending on the locations in a vehicle where the modules are disposed. Some of these modules function as main modules 20 including a large cast component 28. The cast component 28 is composed of a pair of main frame members disposed on opposite sides of a vehicle with respect to a vehicle width center and integrally molded by casting. For example, a Fr module 22f, which will be described below, corresponds to the main module 20.

The plurality of modules further include modules that function as sub modules 45. The sub module 45 includes a sub frame member connecting the pair of main frame members mounted on the main module 20, and an on-vehicle component mounted with the sub frame member. A heat management module 46 to be coupled to the Fr module 22f, which will be described below, an instrument panel module 64, and a Fr end module 96, for example, function as the sub modules 45.

While FIG. 1 shows only one block for manufacturing the modules, a plurality of sub lines are actually provided for manufacturing the modules, in accordance with the type of modules. These sub lines operate independently of each other. The center frame 10 and the modules manufactured in the sub lines are sequentially introduced in the main line.

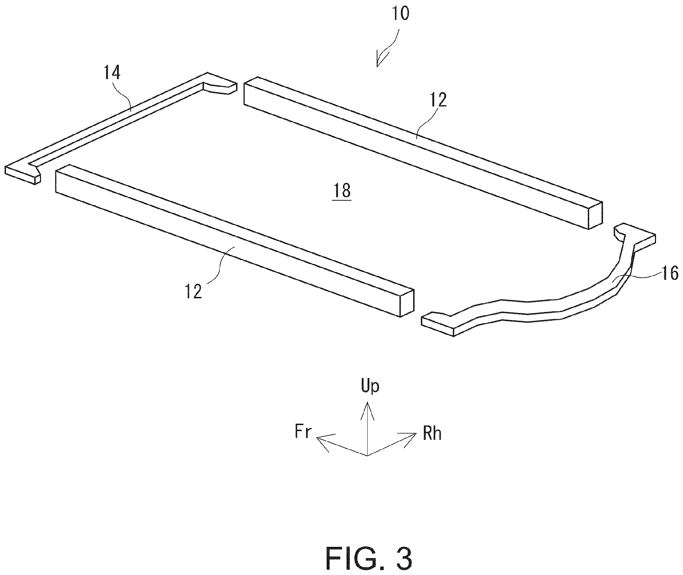

FIG. 3 is an exploded perspective view of the center frame 10. Symbols Fr, Up, and Rh in each drawing denote frontward, upward, and leftward of the vehicle, respectively. The center frame 10 is composed of a pair of center side members 12, a front center cross member 14, and a rear center cross member 16, which are fastened to each other with bolts. The center side member 12 is a frame member that is elongated in the longitudinal direction of the vehicle. Further, the front center cross member 14 is a frame member that couples front ends of the respective center side members 12.

The rear center cross member 16 is a frame member that couples rear ends of the respective center side members 12. These members 12, 14, and 16 constituting the center frame 10 are manufactured by extrusion molding of aluminum, for example. The center frame 10 is composed of these four members 12, 14, and 16 in combination. Thus, the center frame 10 including no additional cross members between the front center cross member 14 and the rear center cross member 16 has a hollow vacant space 18 within the center frame 10.

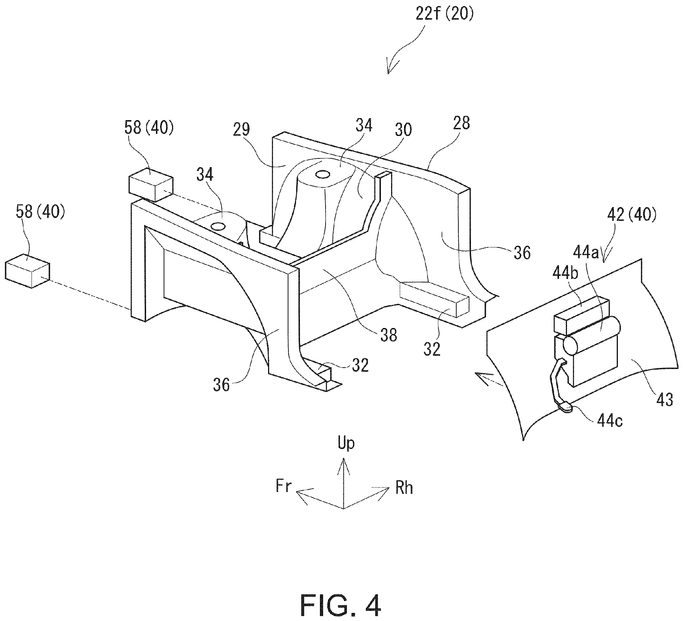

In the main line, the front (Fr) module 22f and the rear (Rr) module 22r (hereinafter referred to as "front and rear modules 22" except where necessary to differentiate the modules from each other) are coupled to the center frame 10 (S14). FIG. 4 is an exploded perspective view of the Fr module 22f. The Fr module 22f includes a Fr cast component 28f and a plurality of element components 40 coupled to the Fr cast component 28f. Part of the Fr cast component 28f functions as the pair of main frame members disposed on opposite sides of the vehicle with respect to the center in the vehicle width direction. As described above, the Fr module 22f including this Fr cast component 28f functions as the main module 20.

The Fr cast component 28f is manufactured by integral casting of a plurality of frame members disposed in the front portion of the vehicle. The Fr cast component 28f has a substantially symmetrical shape. The Fr cast component 28f includes, in each of right and left halves, a Fr inside panel 29, a wheel house 30, a Fr side member 32, a Fr suspension tower 34, and a pillar lower portion 36. The right half and the left half of the Fr cast component 28f are connected by a coupling portion 38. Of these members, at least the Fr inside panels 29, the Fr side members 32, the Fr suspension towers 34, and the pillar lower portions 36 all function as the main frame members for maintaining the strength of the vehicle, and are disposed on the opposite sides with respect to the center of the vehicle in the vehicle width direction. Such an Fr cast component 28f is manufactured by an integral casting technique for large components called mega casting or giga casting.

A plurality of element components 40, including a dash module 42 and crash boxes 58, for example, are coupled with the Fr cast component 28f. The dash module 42 is composed of a dash panel 43 and on-vehicle components, including, for example, an air-conditioning component 44a, an ECU 44b, and a brake pedal 44c, coupled with the dash panel 43. The dash panel 43 is a bulkhead that separates between a power unit chamber and a vehicle cabin. In a stage prior to the sub line or during the sub line, the on-vehicle components including the air-conditioning component 44a, for example, are combined with the dash panel 43 into a module.

In the sub line, the dash panel 43 of the dash module 42 is coupled to the coupling portion 38 of the Fr cast component 28f. Further, the crash boxes 58, which are the element components 40, are also coupled to the Fr cast component 28f. In the event of a frontal collision of the vehicle, the crash box 58 is crushed to thereby absorb crash energy. The crash boxes 58 are fastened, with bolts, to front ends of the respective Fr side members 32 of the Fr cast component 28f in the sub line.

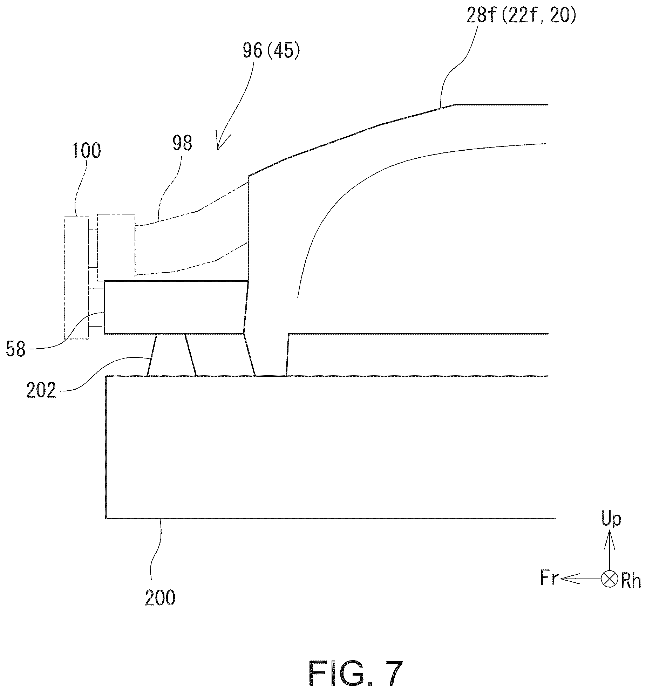

In a later process, a Fr end module 96 is placed above the crash box 58. FIG. 7 is a schematic side view of the Fr module 22f. The Fr end module 96 is a shock absorber and is disposed at a level that is designed to enable the Fr end module 96 to efficiently absorb the impact. It is therefore necessary that the Frend module 96 be placed at a designed level. To place the Fr end module 96 at the designed level, it is in turn necessary that the top surface of the crash box 58 is appropriately positioned. In the present example, to fasten the crash boxes 58 to the Fr cast component 28f, the Fr cast component 28f is first placed on a dedicated truck 200. The truck 200 has a support projection 202 that supports part of the crash box 58. The operator fastens the crash box 58 that is placed on the support projection 202 to the Fr cast component 28f. This enables the crash box 58, and also the Fr end module 96, to be fastened at the appropriate level.

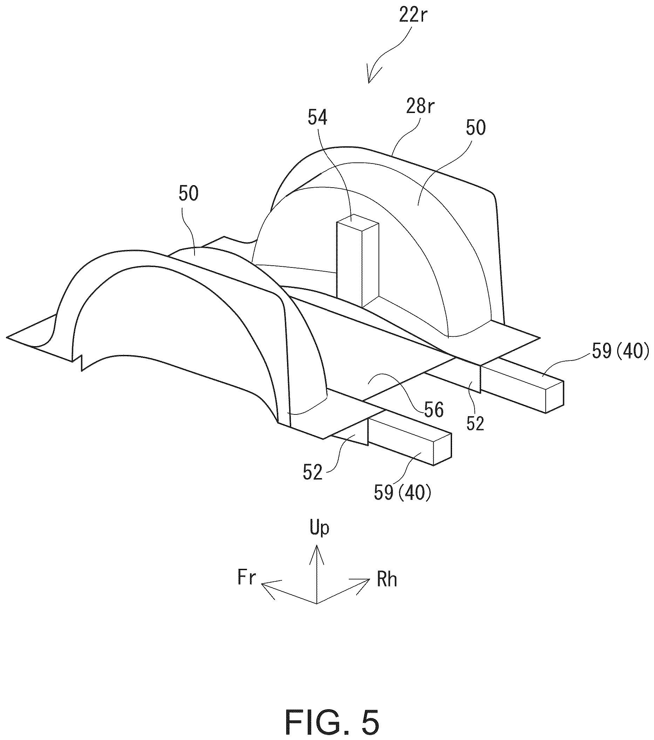

FIG. 5 is a perspective view of the Rr module 22r. The Rr module 22r is disposed in the rear part of the vehicle. The Rr module 22r manufactured in the sub line is introduced in the main line and coupled to the center frame 10. The Rr module 22r includes a Rr cast component 28r and a plurality of element components 40 coupled with the Rr cast component 28r. The Rr cast component 28r is manufactured by integral casting of a plurality of structural members disposed in the rear part of the vehicle. The Rr cast component 28r includes, in each of the right half and the left half, a wheel house 50, a Rr side member 52, and a Rr suspension tower 54. The right half and the left half of the Rr cast component 28r are connected with each other with a coupling portion 56. The Rr side members 52 and the Rr suspension towers 54 function as the frame members. The Rr cast component 28r, similar to the Fr cast component 28f, is manufactured by an integral casting technique of large components called mega casting or giga casting. Rr floor side members 59, which are element components 40, are fastened to the respective Rr side members 52 of the Fr cast component 28f with bolts. The Rr floor side member 59 is part of the frame members in the rear part of the vehicle.

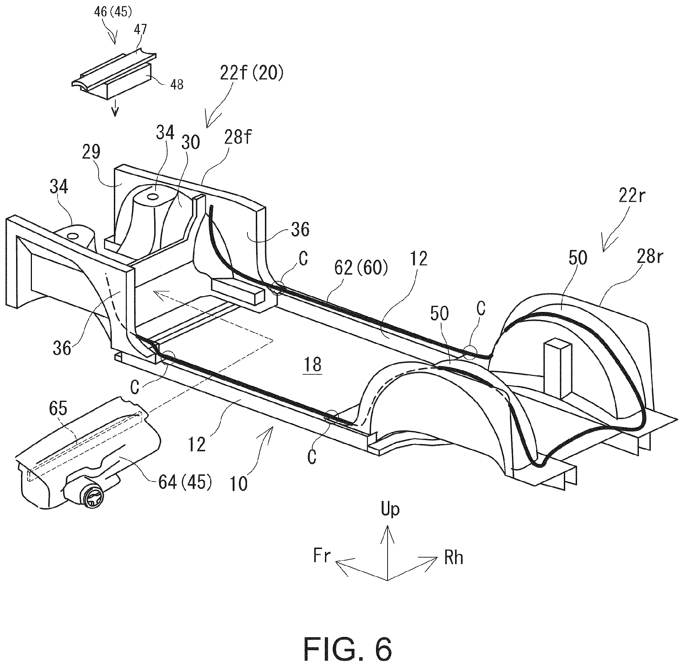

The Fr module 22f and the Rr module 22r manufactured in the sub line are both introduced into the main line and coupled with the center frame 10 (S14). FIG. 6 is a perspective view illustrating the two modules, the front and rear modules 22, coupled with the center frame 10. While FIG. 6 illustrates only the cast components 28f and 28r for ease of viewing, the front and rear modules 22f and 22r composed of these cast components 28 and the element components 40 are actually coupled with the center frame 10.

As illustrated in FIG. 6, the Fr module 22f is coupled to a front end of the center frame 10, and the Rr module 22r is coupled to a rear end of the center frame 10. The coupling is achieved by bolt fastening, for example.

At this stage, the hollow vacant space 18 remains inside the center frame 10. It is therefore possible for an operator to use the inside of the center frame 10 as a workspace when fastening the front and rear modules 22 to the center frame 10. This configuration enables the operator to access the front and rear modules 22 from any of the front, rear, left, and right of the modules to thereby facilitate the fastening operation.

The element components 40 are pre-coupled with the cast components 28f and 28r into modules. This configuration enables the operator to handle the plurality of element components 40 and the cast component 28f, 28r as a single component, which further facilitates handling of the components in the main line. Further, large components such as the cast components 28f and 28r are subjected to distortion. Coupling these cast components 28f and 28r to the center frame 10 and positioning the cast components 28f and 28r with respect to the center frame 10 facilitates positioning between the components during the later process.

After the two modules, the front and rear modules 22, are coupled with the center frame 10, a wide-range component 60 is subsequently mounted on the vehicle body (S16). The wide-range component 60 as used herein refers to an on-vehicle component 92 spanning the Fr module 22f, the center frame 10, and the Rr module 22r. While the wide-range component 60 is not limited to a specific type, in the present example, a wire harness 62 functions as the wide-range component 60. While FIG. 6 shows the wire harness 62 with a single line, the wire harness 62 actually has a primary line or a trunk and a plurality of branch lines branched off from the primary line. The primary line of the wire harness 62, as indicated with a bold line in FIG. 6, is a single line extending from the pillar lower portion 36 on the right side, through the center side member 12 on the right side, the rear wheel house 50 on the right side, the rear wheel house 50 on the left side, and the center side member 12 on the left side, to the pillar lower portion 36 on the left side. In other words, the wire harness 62 is disposed in a substantially U shape that is open frontward. This wire harness 62, when introduced into the main line, is already composed of a single component that is continuous from a start end to a terminal end. Then, in the main line, the wire harness 62 is mounted to the center frame 10 in the form of a single component without being split.

Configuring the wire harness 62 as a continuous single component as described above reduces the cost of the component while also simplifying the assembling operation. This will be described below in comparison with a comparative example. For example, the wire harness 62 may be pre-mounted on the front and rear modules 22. More specifically, the wire harness 62 may be divided, at points indicated by blank circles in FIG. 6, into a plurality of partial harnesses, and in the sub line, the partial harnesses may be mounted on the cast components 28f and 28r, and the center frame 10. This configuration requires an additional operation of coupling the partial harnesses with each other after coupling the front and rear modules 22 with the center frame 10 in the main line. Further, connectors are necessary at the coupling locations, which increases the number of components and therefore increases the costs.

As described above, in the present example the wire harness 62 is introduced in the main line as a single continuous component, without being mounted on the front and rear modules 22. This configuration eliminates the need for the coupling operation of the partial harnesses and of connectors for coupling. This simplifies the assembling operation of the wire harness 62 on the vehicle body and also reduces component costs. As described above, mounting of the wire harness 62 is performed after the front and rear modules 22f and 22r are coupled with the center frame 10 and before the side module 66 and the battery module 82, which will be described below, are coupled with the center frame 10. At this time, the operator may be either outside the vehicle body, or inside the center frame 10 which is almost entirely free of possible impediments to the operation or the field of view. This enables the operator to access the coupling site of the wire harness 62 easily from any location.

Once the wire harness 62 is coupled, the operator subsequently couples the heat management module 46 and the instrument panel module 64 to the vehicle body (S18). The heat management module 46 and the instrument panel module 64 are both sub modules 45 to be coupled with the main module 20 in the main line.

The instrument panel module 64 is a component including the on-vehicle components and an instrument panel reinforcement 65 coupled into a module. The instrument panel reinforcement 65 is a frame member extending in the vehicle width direction at the back of the instrument panel. The instrument panel reinforcement 65 functions as a sub frame member connecting a pair of pillar lower portions 36. As such, the configuration in which the pair of main frame members disposed on the main module 20 are connected with the sub frame member maintains the increased strength of the vehicle body.

The instrument panel module 64 further includes an instrument panel, a steering wheel, and meters. These on-vehicle components are coupled with the instrument panel reinforcement 65 that is a sub frame member into a module in the sub line.

The heat management module 46 is composed of a sub frame member referred to as a suspension tower bar or strut tower bar 47 coupled together with a heat management unit 48. The suspension tower bar 47 functions as a sub frame member connecting the pair of Fr suspension towers 34. The opposite ends of the suspension tower bar 47 are fastened to the top faces of the Fr suspension towers 34. The heat management unit 48 is configured to adjust the temperatures of heat generating components (e.g., an engine or battery, an inverter, for example), and includes a heat exchanger or a compressor, and piping through which a refrigerant flows. In a stage prior to the sub line or during the sub line, the heat management unit 48 is combined with the suspension tower bar 47 to form a module.

After fastening the Fr module 22f to the center frame 10 and prior to fastening the side modules 66 and the battery module 82 to the center frame 10, the operator fastens the sub modules 45, which are the instrument panel module 64 and the heat management module 46, to the Fr module 22f. More specifically, the opposite ends of the instrument panel reinforcement 65 are coupled with the left and right pillar lower portions 36, respectively. Further, the opposite ends of the suspension tower bar 47 are coupled with the left and right Fr suspension towers 34, respectively. Mounting of the sub modules 45 at this stage enables the operator to enter the inside of the center frame 10 for operation. The instrument panel module 64 and the heat management module 46 are both relatively large size components. As these modules 64 and 46 are mounted prior to mounting of the side modules 66, these large size modules 64 and 46 can be easily conveyed inside the vehicle body from outside the vehicle. Assembling the instrument panel and the components associated with heat management into modules in advance facilitates handling of the components in the main line.

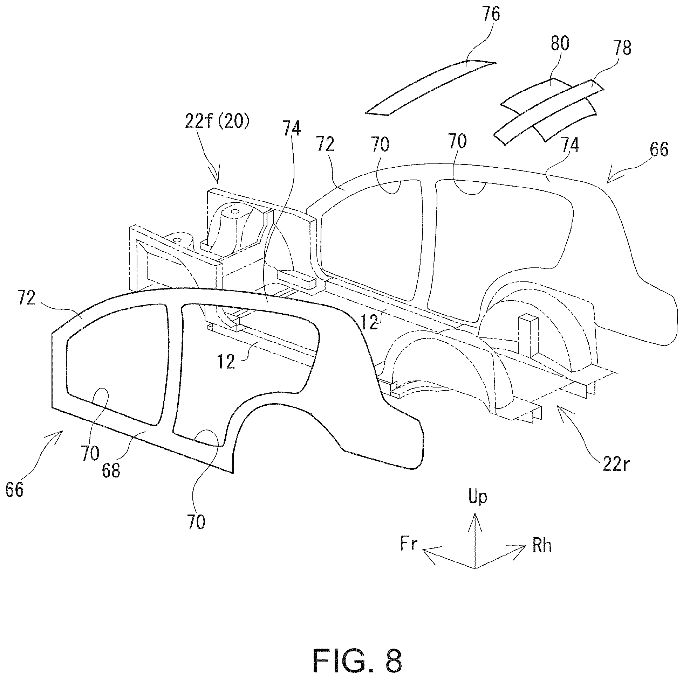

After the heat management module 46 and the instrument panel module 64 are coupled, the operator then couples the side modules 66 to the center frame 10 (S20). FIG. 8 is a perspective view illustrating coupling of the side modules 66 to the center frame 10. The side module 66 constitutes a side face of the vehicle body. The side module 66 is composed by joining a plurality of sheet metal members in the sub line. Coating processing is also performed with respect to the side modules 66 in the sub line. The lower edge of the side module 66 functions as a rocker panel 68 that is a frame member extending in the vehicle length direction. The rocker panel 68 includes, at the opposite end portions along the vehicle length, arc-shaped wheel arches along the peripheral edges of the wheel houses 50.

The upper edge of the side module 66 functions as a pillar upper portion 72 and a roof side rail 74. The pillar upper portion 72 is a frame member disposed at each side of a windshield glass (not shown). The lower end of the pillar upper portion 72 is located near the upper end of the pillar lower portion 36 of the Fr cast component 28f. The roof side rail 74 is a frame member disposed at both sides of the roof and extending along the vehicle length. A door opening 70 is formed between the roof side rail 74 and the rocker panel 68. In the illustrated example, a total of four door openings 70 are provided, two at each side. The side module 66 may include an additional element component 40, in addition to the metal sheet member. For example, the side module 66 may include a resin design component called trim panel or an electrical component such as a lighting apparatus.

In the main line, with the rocker panel 68 being aligned with the center side member 12 in the vehicle width direction, the lower edge of the side module 66 is coupled with the center frame 10 and the cast components 28f and 28r (S20). The lower edge of the side module 66 may be fastened to the center side member 12 and the cast components 28f and 28r by bolt fastening, for example.

After the side modules 66 are coupled with the vehicle body, a roof cross member is then coupled to the pair of side modules 66 (S22). The roof cross member is a frame member coupling the pair of roof side rails 74. In the present example, a header reinforcement 76 located in the intermediate portion of the roof and a back frame 78 located near the rear end of the roof function as the roof cross member. Of the header reinforcement 76 and the back frame 78, the back frame 78 has been combined with an antenna 80 in the sub line to form a module. Combining the back frame 78 and the antenna 80 in advance into a module increases workability around the roof.

More specifically, if the back frame 78 and the antenna 80 are separated, after the back frame 78 is coupled to the roof side rail 74 in the main line, an operation to mount the antenna 80 would be necessary. To mount the antenna 80, it would be necessary for the operator to deliver the antenna 80 inside the vehicle and mount the antenna 80 to the back frame 78 in the narrow space within the vehicle while facing upward, which is an arduous and time-consuming task for the operator.

To the contrary, when the antenna 80 is mounted to the back frame 78 in advance in the sub line, it is possible for the operator to work within a wide space with a posture of facing down at the back frame 78 and the antenna 80. Then, in the main line, it is only necessary to mount the back frame 78 formed into a module, to the roof side rail 74. This significantly increases operation efficiency. As the coupling operation of the modular back frame 78 is relatively simple, this configuration is also conducive to robotic automation.

Subsequently, in the main line, a back door, a rear seat, a glass roof, and a trim (all of which are not shown) are mounted to the vehicle body (S24). Further, all mountable components are mounted on the vehicle at this timing, prior to mounting of the battery module 82, which will be described below. At this timing, the vacant space 18 inside the center frame 10 is available and facilitates delivery of the components and operation.

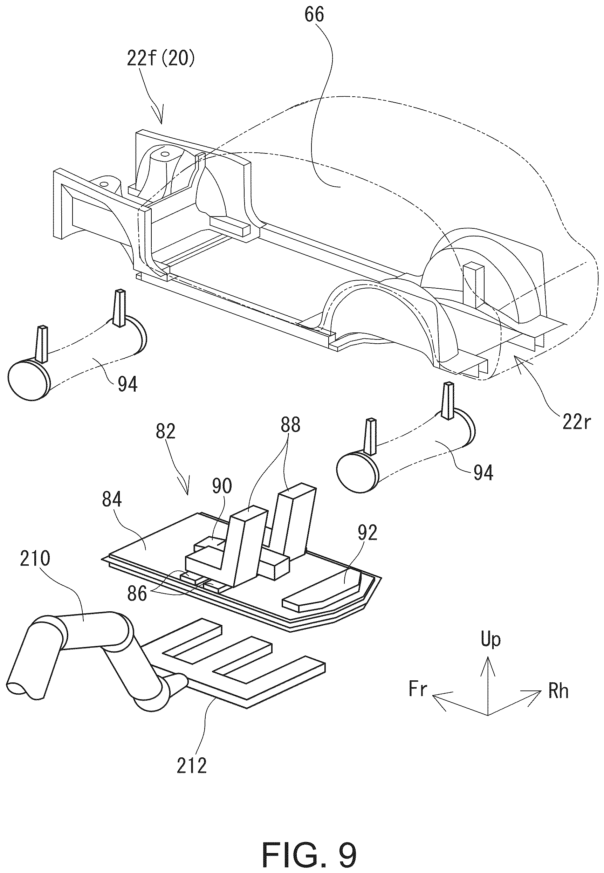

Then, in the main line, the battery module 82 and the power train module 94 are coupled with the vehicle body (S26 and S28). FIG. 9 schematically illustrates mounting of the battery module 82 and the power train module 94 to the vehicle body.

The battery module 82 and the power train module 94 are composed in advance in the sub line. The battery module 82 is a module including a battery pack 84, and element components 40 such as a seat cross member 86, Fr seats 88, a console unit 90, and on-vehicle components 92 that are coupled with the battery pack 84. The battery pack 84 is a single component composed of a plurality of battery cells (not shown) contained in a battery casing as a unit. In the present example, the battery pack 84 has a flat shape that extends over the entire floor of the vehicle cabin, as illustrated in FIG. 9. The seat cross member 86 is attached to the upper side of the battery pack 84. The seat cross member 86 is a frame member extending in the vehicle width direction to couple the pair of center side members 12. In the illustrated example, two seat cross members 86 are arranged side by side in the vehicle length direction. On these seat cross members 86, two Fr seats 88 are disposed side by side in the vehicle width direction, and the console unit 90 is further disposed between the two Fr seats 88. In addition, an on-vehicle component 92 such as an auxiliary machine battery is disposed in a rear part of the battery pack.

In the main line, the battery module 82 is fastened to the center frame 10. During this fastening operation, the vehicle that is being manufactured, including the center frame 10, is suspended from above. In the main line, the battery module 82 is lifted by an articulated robot 210 and fastened to the center frame 10. More specifically, a flange protruding from the periphery of the battery pack 84 is fastened to the undersurface of the center side members 12 by screwing, and the opposite ends of the seat cross member 86 are also fastened to the side faces of the center side members 12 by screwing. Further, the on-vehicle component 92 and the components of the console unit 90 are electrically connected, as necessary.

As is clear from the above description, in the present example, large size components such as the Fr seats 88 are pre-mounted to the battery pack 84. This configuration enables reduction in the time required for mounting large size components. Specifically, in a configuration in which the Fr seats 88 and the seat cross member 86 are mounted after the battery pack 84 is mounted to the center frame 10, it is necessary to deliver these large size components through the door openings 70, which requires a large amount of time. Then, after the delivery of these components, assembly operations must be performed in a narrow space within the vehicle, which extends the time required for assembly. Meanwhile, the configuration in the present example, in which the large size components such as the Fr seats 88 are mounted in advance to the battery pack 84 in the sub line, enables completion of delivery of the large size components simultaneously with the mounting of the battery pack 84. Also, as the mounting operation of the large size components such as the Fr seats 88 and the on-vehicle component 92 is performed outside the vehicle, a wide space may be utilized, enabling significant reduction in the time required for the operation.

The power train module 94 is also mounted to the vehicle from under the vehicle by the articulated robot 210. The power train module 94 is configured to transmit the driving force from the power source to tires. Typically, the power train module 94 includes a suspension, a gear box, a drive shaft, and a differential gear, and may also include at least one of a driving electric motor, an inverter, and a controller. Such a power train module 94 is also preassembled in the sub line. The power train module 94, which introduced in the main line, is delivered and mounted to the vehicle by the articulated robot 210, similar to the battery module 82.

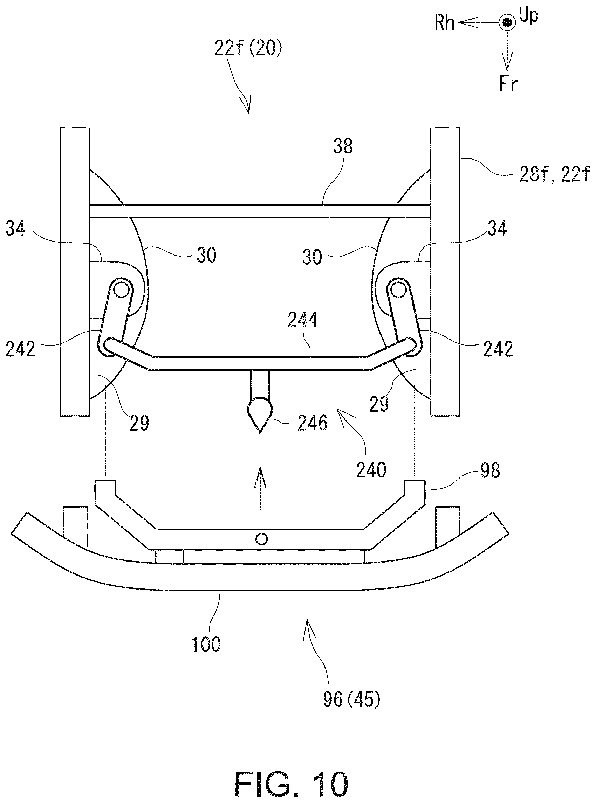

Thereafter, various body shell components, design components, and installation components are mounted to the vehicle (S30). The components that are mounted may include, for example, an under cover, windshield glass, side doors, a hood, fenders, a headlamp, and the Fr end module 96. Mounting of the Fr end module 96 will be described by reference to FIG. 10. FIG. 10 is a schematic plan view and illustrates coupling of the Fr end module 96 to the Fr module 22f.

The Fr end module 96 is a sub module 45 including a radiator support 98 and a bumper reinforcement 100. In this configuration, the radiator support 98 functions as a sub frame member connecting left and right Fr inside panels 29 (that is, a pair of main frame members). The operator fastens left and right ends of the radiator support 98 to the respective Fr inside panels 29 and also fastens the bumper reinforcement 100 to the crash boxes 58.

It is necessary to align the center of the Fr end module 96 in the vehicle width direction with the center of the hood (not shown), which is to be subsequently mounted, in the vehicle width direction. Here, to couple the Fr end module 96, the Fr end module 96 may be positioned with respect to the Fr module 22f, with either one of the left or right end of the Fr end module 96 being used as a reference. However, the Fr cast component 28f is a large size cast component which typically tend to have a relatively large shape error, which makes the locations of the right front portion and the left front portion thereof likely to vary along the vehicle width direction. Mounting the Fr end module 96 by reference to one of these right or left front portion may cause a significant shift of the center of the Frend module 96 in the vehicle width direction from the center of the hood in the vehicle width direction.

To address the above issue, in the present example, a positioning jig 240 is attached to the Fr cast component 28f prior to mounting of the Fr end module 96, to thereby confirm the center of the Fr cast component 28f. The positioning jig 240 includes fixing members 242 screwed to a right side portion and a left side portion of the Fr cast component 28f, respectively, a coupling bar 244 coupled to the left and right fixing members 242, and a positioning part 246 disposed at the center of the coupling bar 244. The operator aligns the center of the radiator support 98 in the vehicle width direction with the positioning part 246 of the positioning jig 240, and in this state fastens the radiator support 98 to the Fr cast component 28f to thereby make the centers of the Fr end module 96, the Fr module 22f, and the hood in the vehicle width direction correspond to each other, thus increasing the quality of fitting.

As is clear from the above description, in the present example, the heat management module 46, the instrument panel module 64, and the Fr end module 96, which are sub modules 45, are coupled with the Fr module 22f that is a main module 20. In this configuration, pairs of main frame members included in the main modules 20 (e.g., the Fr suspension towers 34, the pillar lower portions 36, and the Fr inside panels 29) are connected by the sub frame members included in the sub modules 45 (e.g., the suspension tower bar 47, the instrument panel reinforcement 65, and the radiator support 98). This configuration restricts the position of each pair of main frame members relative to each other to thereby increase rigidity of the vehicle body. Further, as the sub frame members are combined with other on-vehicle components into modules in advance, handling of the components is facilitated and efficiency of manufacture of the vehicle is enhanced.

The configuration described above is only one example, and a vehicle may include the feature as recited in Claim 1 with other features modified as appropriate. For example, while in the above example, the Fr module 22f is the main module 20, the main module 20 may be any other module that includes a cast component integrally molded by casting, with a pair of main frame members disposed on opposite sides with respect to the center in the vehicle width direction. While in the above example, the center frame 10 is composed of a combination of components, part or all of the center frame 10 may be replaced by a center cast component. In this configuration, the center cast component includes a pair of center side members 12 integrally formed by casting, and the battery module 82 may be coupled with the center frame module including the center cast component. In this configuration, the center side member 12 functions as a main frame member, and the seat cross member 86 of the battery module 82 functions as a sub frame member. Further, in this configuration, the center frame module functions as a main module 20, and the battery module 82 functions as a sub module 45.

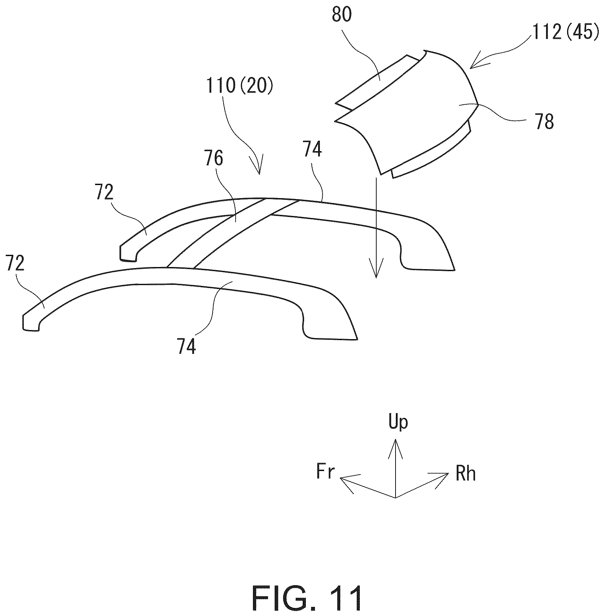

In another embodiment, a roof cast component composed of a pair of roof side rails 74 integrally formed by casting may be disposed. For example, as illustrated in FIG. 11, a roof cast component 110 composed of left and right roof side rails 74 and a header reinforcement 76 integrally formed by casting may be disposed as a main module 20. In the main line, an antenna module 112 including a back frame 78 may be joined to the roof cast component 110. In this configuration, the back frame 78 functions as a sub frame member, and the antenna module 112 functions as a sub module 45. In a further embodiment, the left and right roof side rails 74 and the back frame 78 may be integrally molded by casting, and a sub module 45 including the header reinforcement 76 and on-vehicle components may be coupled with a main module 20 including this cast component.

In the present specification, "frame member" refers to a member configured to maintain the strength of a vehicle. In addition to or in place of the member illustrated in the present specification, the frame member may be a member for which there is a requirement to record repair history. For example, Automobile Fair Trade Council, Japan Auto Appraisal Institute (JAAI), and Japan Used Car Dealers Association specify recording repair or replacement of specific components in a "repair history". Components that are specified as subjects of the repair history under these rules may be treated as the frame members in the present specification.

### REFERENCE SIGNS LIST

10 center frame, 12 center side member, 14 front center cross member, 16 rear center cross member, 18 vacant space, 20 main module, 22f Fr module, 22r Rr module, 28f Fr cast component, 28r Rr cast component, 29 Fr inside panel, 32 Fr side member, 34 Fr suspension tower, 36 pillar lower portion, 38, 56 coupling portion, 40 element component, 42 dash module, 43 dash panel, 45 sub module, 46 heat management module, 47 suspension tower bar, 48 heat management unit, 50 rear wheel house, 50 wheel house, 52 Rr side member, 54 Rr suspension tower, 58 crash box, 59 Rr floor side member, 60 wide range component, 62 wire harness, 64 instrument panel module, 65 instrument panel reinforcement, 66 side module, 68 rocker panel, 70 door opening, 72 pillar upper portion, 74 roof side rail, 76 header reinforcement, 78 back frame, 80 antenna, 82 battery module, 84 battery pack, 86 seat cross member, 88 Fr seat, 90 console unit, 92 on-vehicle component, 94 power train module, 96 Fr end module, 98 radiator support, 100 bumper reinforcement, 110 roof cast component, 112 antenna module, 200 truck, 202 support projection, 210 articulated robot, 240 positioning jig, 242 fixing member, 244 coupling bar, 246 positioning part.

## Claims

1. A method of manufacturing a vehicle, the method comprising:
preparing a plurality of modules (20, 45) that constitute a vehicle body in each of a plurality of sub lines; and
coupling the plurality of modules (20, 45) to construct the vehicle body in a main line, wherein
the plurality of modules (20, 45) include:
a main module (20, 22f, 22r) including a cast component (28f, 28r) having at least a pair of main frame members (12, 34, 36, 29, 74) disposed on opposite sides of a vehicle with respect to a center of the vehicle in a vehicle width direction, the main frame members being integrally molded into the cast component by casting; and
a sub module (45, 46, 64, 96, 82, 112) including a sub frame member (47, 65, 98, 86, 76, 78) connecting the pair of main frame members (12, 34, 36, 29, 74) and an on-vehicle component (92) mounted on the sub frame member, and
the sub module (45, 46, 64, 96, 82, 112) is coupled with the main module (20, 22f, 22r) in the main line.

2. The method of manufacturing a vehicle according to claim 1, wherein
the main module (20, 22f, 22r) includes the cast component (28f, 28r) and one or more element components (40) coupled with the cast component (28f, 28r) in the sub line.

3. The method of manufacturing a vehicle according to claim 2, wherein
the cast component (28f) is a front cast component (28f) disposed in a front portion of the vehicle,
the front cast component (28f) includes a pair of front side members (32), a pair of suspension towers (34), a pair of front inside panels (29), and a pair of pillar lower portions (36),
the one or more element components (40) include a dash module (42), and
the dash module (42) includes a dash panel (43) coupled with the cast component (28f, 28r), and an air-conditioning component (44a) coupled with the dash panel (43).

4. The method of manufacturing a vehicle according to claim 3, further comprising:
in the sub line, preparing a center frame (10) having a rectangular shape, the center frame (10) including a pair of center side members (12) and a pair of center cross members (14, 16) coupling the pair of center side members (12); and
in the main line, after coupling the main module (20, 22f, 22r) to the center frame (10), coupling the sub module (45, 46, 64, 96, 82, 112) to the main module (20, 22f, 22r).

5. The method according to any one of claims 1 to 4, wherein
the pair of main frame members (29) is a pair of front inside panels (29), and
the sub frame member (98) is a radiator support (98) connecting the pair of front inside panels (29).

6. The method according to claim 5, wherein
the sub module (45, 96) is a front end module (96) including the radiator support (98) and a bumper reinforcement (100) that is the on-vehicle component.

7. The method according to claim 6, wherein
the main module (20, 22f, 22r) further includes a pair of front side members (32) that are part of the cast component (28f), and a pair of crash boxes (58) coupled with the pair of front side members (32), respectively,
the radiator support (98) is coupled with the front inside panels (29) with the radiator support being placed on top surfaces of the respective crash boxes (58), and
the bumper reinforcement (100) is coupled with end faces of the respective crash boxes (58).

8. The method according to any one of claims 1 to 4, wherein
the pair of main frame members (34) is a pair of suspension towers (34), and
the sub frame member (47) is a tower bar (47) connecting the pair of suspension towers (34).

9. The method according to claim 8, wherein
the sub module (46) is a heat management module (46) including the tower bar (47) and a heat management unit (48) that is the on-vehicle component.

10. The method according to any one of claims 1 to 4, wherein
the pair of main frame members (36) is a pair of pillar lower portions (36), and
the sub frame member (65) is an instrument panel reinforcement (65) connecting the pair of pillar lower portions (36).

11. The method according to claim 10, wherein
the sub module (64) is an instrument panel module (64) including the instrument panel reinforcement (65) and an instrument panel that is the on-vehicle component.

12. The method according to any one of claims 1 to 4, wherein
the pair of main frame members (12) is a pair of center side members (12), and
the sub frame member (86) is a seat cross member (86) connecting the pair of center side members (12).

13. The method according to claim 12, wherein
the sub module (82) is a battery module (82) including the seat cross member (86) and a battery (82) that is the on-vehicle component.

14. The method according to any one of claims 1 to 4, wherein
the pair of main frame members (74) is a pair of roof side members (74), and
the sub frame member (76,78) is a roof cross member (76,78) connecting the pair of roof side members (74).

15. The method according to claim 14, wherein
the sub module (112) is an antenna module (112) including a back frame (78) that is the roof cross member (78), and an antenna (80) that is the on-vehicle component.

16. A vehicle comprising:
a main module (20, 22f, 22r) including a cast component (28f, 28r) having at least a pair of main frame members (12, 34, 36, 29, 74) disposed on opposite sides of a vehicle with respect to a center of the vehicle in a vehicle width direction and integrally molded into the cast component (28f, 28r) by casting; and
a sub module e (45, 46, 64, 96, 82, 112) including a sub frame member (47, 65, 98, 86, 76, 78) connecting the pair of main frame members (12, 34, 36, 29, 74) and an on-vehicle component mounted on the sub frame member (47, 65, 98, 86, 76, 78).
